# EUROPEAN PATENT SPECIFICATION

(11) **EP 3 002 253 B1**
(45) Date of publication and mention of the grant of the patent: **09.12.2020**
(21) Application number: 15155723.8
(22) Date of filing: 19.02.2015
(51) Int. Cl.: C01B 32/174

(54) **THE PROCESS OF PREPARING THE BROMINATED MULTI-WALLED CARBON NANOTUBES (MWCNT) CONTAINING BROMINE ATOMS AND THE WAY OF PURIFICATION THEM**
DAS VERFAHREN ZUR HERSTELLUNG DER BROMIERTEN MEHRWANDIGEN KOHLENSTOFF-NANORÖHREN (MWCNT), DIE BROMATOME ENTHALTEN, UND DIE ART UND WEISE IHRER REINIGUNG
LE PROCESSUS DE PRÉPARER LES NANOTUBES MULTI-MURÉS BROMÉS DE CARBONE (MWCNT) CONTENANT DES ATOMES DE BROME ET LA MANIERE DE LES PURIFIER

(30) Priority: 30.09.2014 PL 40966214
(43) Date of publication of application: 06.04.2016
(73) Proprietor: Uniwersytet Humanistyczno-Przyrodniczy im. Jana Dlugosza w Czestochowie, 42-200 Czestochowa (PL)
(72) Inventor: Ciesielski, Wojciech, 42-200 Czestochowa (PL); Drabowicz, Józef, 93-419 Lodz (PL); Kulawik, Damian, 42-200 Czestochowa (PL)
(74) Representative: Malewska, Ewa

(56) References cited:
- US-A1- 2008 296 539
- SVEN HANELT ET AL: "Study of Lewis acid catalyzed chemical bromination and bromoalkylation of multi-walled carbon nanotubes", CARBON, ELSEVIER, OXFORD, GB, vol. 50, no. 3, 5 November 2011 (2011-11-05), pages 1373-1385, XP028343620, ISSN: 0008-6223, DOI: 10.1016/J.CARBON.2011.11.009 [retrieved on 2011-11-15]
- DATSYUK V ET AL: "Chemical oxidation of multiwalled carbon nanotubes", CARBON, ELSEVIER, OXFORD, GB, vol. 46, no. 6, 1 May 2008 (2008-05-01), pages 833-840, XP022655597, ISSN: 0008-6223, DOI: 10.1016/J.CARBON.2008.02.012 [retrieved on 2008-02-21]

## Description

The present invention relates to the method for producing brominated multi-walled carbon nanotubes named in this patent application by the commonly employed in the chemical literature a shortcut MWCNT (a shortcut of full name Multiwalled Carbon Nanotube).

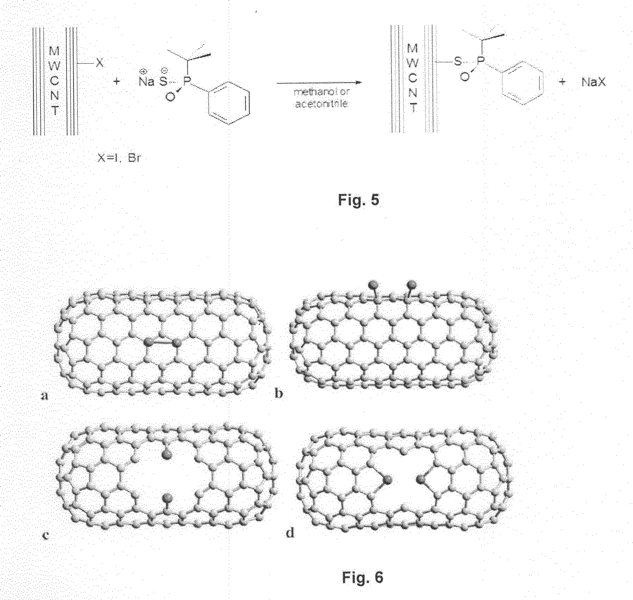

Brominated MWCNT (Formula 1) due to the presence of a carbon - bromine bond (bonds), can be used as key starting materials for functionalization of MWCNT based on the reaction of nucleophilic substitution at the carbon atom (atoms) forming the carbon - bromine bond (bonds). An example of the functionalization reaction, using the sodium salt of t-butyl-phenylthiophosphinic acid (Formula 2) as the nucleophilic reagent is shown in Fig. 5.

In the chemical literature (Bulusheva, L.G. et al, "Bromination of Double-Walled Carbon Nanotubes", Chemistry of Materials (Impact Factor: 8.24). 01/2012; 24:2708-2715. DOI:10.1021/cm3006309 - [1]), based on studies of Raman spectroscopy, the structures of the reaction products of elemental bromine and MWCNT were proposed (Fig. 6). When analyzing the proposed structures it is worth noting that the fictionalization based on the model of transformation shown in Fig.5 is possible when the atom (atoms) of bromine creates (create) a covalent bond (bonds) with carbon atom (atoms) of MWCNT (structure b and c).

Analysis of the chemical literature showed the existence of several publications which describe the formation of brominated and iodinated MWCNT.

These literature procedures are based on:
1. placing the MWCNT and bromine in a closed container for 7 days at room temperature and subsequent purification of the crude reaction product (Bulusheva, L.G. et al, "Bromination of Double-Walled Carbon Nanotubes", Chemistry of Materials (Impact Factor 8.24). 01/2012; 24:2708-2715. DOI:10.1021/cm3006309 - [1]);
2. modification of the procedure presented under 1, above, consisting in reducing the reaction time to 5 days (Souza Filho, AG et al, "Resonance Raman scattering studies in Br-2-adsorbed double-wall carbon nanotubes 06/2006; DOI:10.1103/ PhysRevB.73.235413 Source: OAI - [2]);
3. a high temperature reaction of powdered iodine given in excess into a liquid comprising carbon nanotubes functionalized with functional groups containing sp2 or sp hybridized carbon atoms according to the Polish patent No. PL222516 (application P-395834 of Aug.2,2011 "A process for preparing iodinated carbon nanotubes" in the name of IChF PAN - [3]).

Datsyuk, V. et al, have studied effects of oxidation on the structural integrity of multi-walled carbon nanotubes using acidic and basic oxidation agents, while introducing carboxylic and hydroxyl functionalities, followed by non-oxidative treatment with hydrochloric acid. As the oxidation agents, among others ammonium hydroxide/hydrogen peroxide and a mixture of sulfuric acid and hydrogen peroxide have been used. Results of the experiments were examined by electron microscopy and thermogravimetric analysis. In the studies X-ray photoelectron spectroscopy (XPS) was employed to confirm different functionalities produced by each oxidation agent and titration measurements were used to determine the relative concentration of carboxylic functions. (Datsyuk, V. et al, "Chemical oxidation of multiwalled carbon nanotubes", CARBON, Elsevier, Oxford, GB, vol. 46, no. 6, doi:10.1016/J.CARBON. 2008.02.012, ISSN 0008-6223, (20080501), pages 833 - 840, (20080221), XP022655597 [Y] 1-3, section 2; page 834).

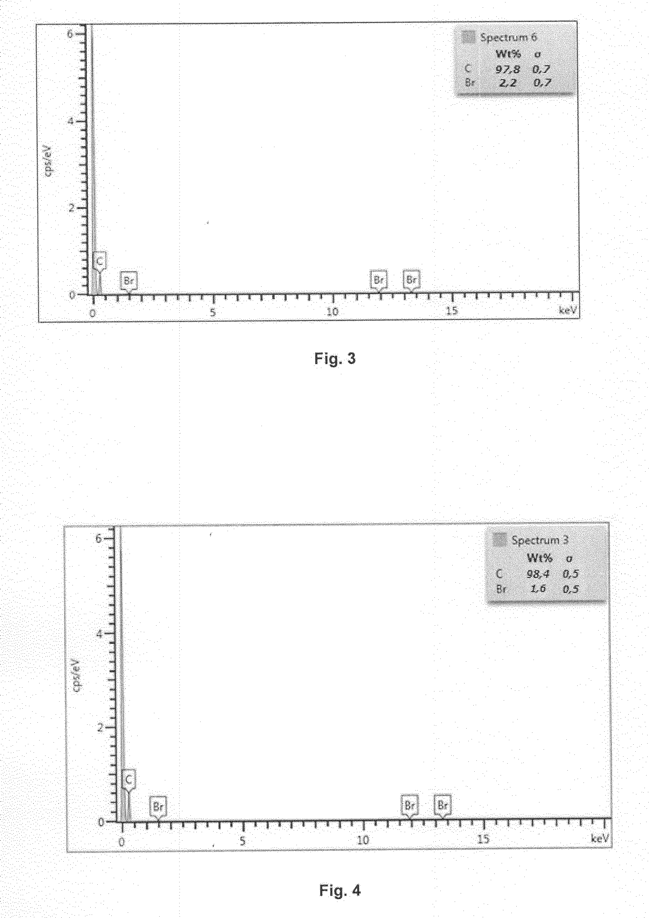

Hanelt, S. et al, in their non-patent publication of March 12, 2012 (Hanelt, S. et al, "Study of Lewis acid catalyzed chemical bromination and bromoalkylation of multi-walled carbon nanotubes", CARBON, ELSEVIER, OXFORD, GB, vol. 50, no. 3, doi:10.1016/ J.CARBON.2011.11.009, ISSN 0008-6223, (20111105), pages 1373 - 1385, (20111115), XP028343620 [Y] 1-3, section 2.3.1; page 1374, sections 2.4.1 and 2.4.3; page 1375, fig. 3) disclosed functionalization of carbon nanotubes with nucleophiles, which required introduction of electrophilic reactive sites on the carbon nanotubes. Such an introduction could be accomplished by chemical bromination procedure with elemental bromine and a set of Lewis acids or a radical starter in a suitable solvents at varied temperatures. The obtained degree of bromination was analyzed by X-ray photoelectron spectroscopy (XPS). The studied amount of introduced bromine that could be substituted by a nucleophile was also presented and discussed.

In the US patent application published under the number US 2008/0296539 A1 that matured into the US patent No. 8,480,994 a method for modifying the surface of carbon nanotubes without chemical bonding is disclosed. The method consists of preparation of a mixed solution in which a radical initiator and carbon nanotubes are dispersed, applying an energy to the mixture to decompose the radical initiator into radicals, reacting the radicals with a surface of the carbon nanotube and subsequently detaching the radicals after the reaction from the surface of the carbon nanotubes. Display electrodes comprising carbon nanotubes with the thus modified surface are also disclosed.

A process for producing preparation of brominated multi-walled carbon nanotubes, wherein the multi-walled carbon nanotubes functionalized with carboxyl groups, obtained by previous oxidation of native multi-walled carbon nanotubes with 30% hydrogen peroxide, are subjected to the reaction with liquid bromine carried out at 30°C for 5 to 10 days and affording multiwalled carbon nanotubes functionalized with covalently linked bromine atoms as confirmed by EDS analysis carried out with respect to both the crude and purified brominated product, wherein purification procedure consists of the following steps:
a) dispersion in distilled water and centrifugation at 9000 rpm. for 10 min and decantation the liquid layer from over the nanotubes;
b) addition of methanol to the residues from step a) and centrifugation for 10 min. at 9000 rpm. and decantation the methanol layer from over the nanotubes;
c) putting the residues from step b) into the oven for a minimum 12 hours at. 65°C; and
d) adding benzene to the sample obtained in step c), centrifugation for 10 min. at 9000 rpm., decantation benzene layer and leaving the residues for minimum 12 hours in the drying oven at 80°C.

According the invention, the native multi-walled carbon nanotubes purified and oxidized with hydrogen peroxide and consequently having the functional groups -COOH, are placed on a petri glass dish in a closed vessel with liquid bromine and intensely stirred with a magnetic stirrer in order to increase the bromine vapor pressure in the vessel and then the whole is placed in an oil bath and heated at 30°C for 10 days.

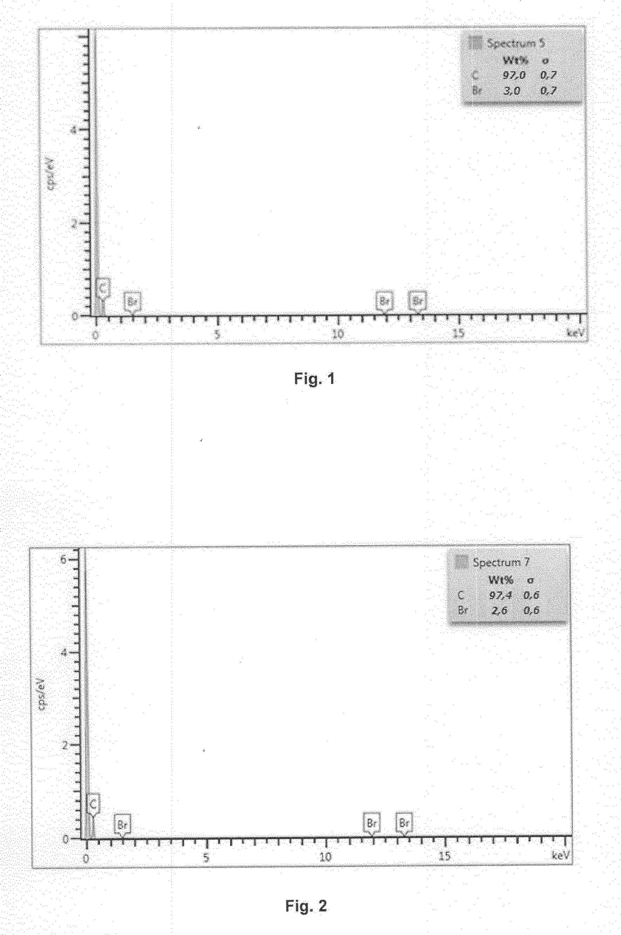

With the aim of determining the presence of covalently bounded bromine in a product isolated after the bromination, the analysis by energy dispersive X-ray spectroscopy (EDS) was carried out in microareas of the product. This analysis showed that the resulting product contained the bromine atoms (Fig. 1).

After purification of the crude product of bromination process, the chemical analysis in microareas was carried out again by energy dispersive X-ray spectroscopy (EDS) with the aim of determining the presence of covalently bonded bromine atoms. Analysis showed that the purified product still contains the bromine atoms (Fig. 2).

The sample was further purified by the method of the invention described above. Product was subjected to next chemical analysis in microareas by energy dispersive X-ray spectroscopy (EDS). The resulting system also contained bromine atoms (Fig. 3).

The system was kept for 36 hours under nitrogen, and again studied using analysis employing energy dispersive X-ray spectroscopy (EDS) in microareas. The system still contained the bromine atoms (Fig. 4).

The analysis of the EDS spectra presented above shows that, the subject matter of the present patent application allows for the isolation of compounds containing covalent bonds between bromine atoms and atoms of carbon nanotubes.

### EXAMPLE I

The bromination procedure of multi-walled carbon nanotubes (MWCNTs).

Multi-walled carbon nanotubes were purified and oxidized with 30% hydrogen peroxide, and nanotubes having consequently -COOH as the functional groups (1 g) was placed on a petri reaction dish in a closed vessel containing liquid bromine (50 mL) and a magnetic dipole. The vessel was placed in an oil bath and heated at 30°C for 10 days, while stirring bromine to increase the pressure of its vapor. After completion of the bromination the analysis of the crude product by EDS spectroscopy confirmed the presence of the covalently bound bromine. This confirmation was additionally supported after by purification procedure described above which is, for the sake of clarity, repeated below:
a) dispersion in distilled water and centrifugation at 9000 rpm. for 10 min and decantation the liquid layer from over the nanotubes;
b) addition of methanol to the residues from step a) and centrifugation for 10 min. at 9000 rpm. and next decantation the methanol layer from over the nanotubes;
c) putting the residues from step b) into the oven for a minimum 12 hours at. 65°C; and
d) adding benzene to the remaining sample obtained in step c) benzene, centrifugation for 10 min. at 9000 rpm., decantation benzene layer and leaving the residues for minimum 12 hours in the drying oven at 80°C.

## Claims

1. A process for producing brominated multi-walled carbon nanotubes, wherein the multi-walled carbon nanotubes functionalized with carboxyl groups, obtained by previous oxidation of native multi-walled carbon nanotubes with 30% hydrogen peroxide, are subjected to the reaction with liquid bromine by heating carried out at 30°C for 5 to 10 days and affording multi-walled carbon nanotubes functionalized with covalently linked bromine atoms as confirmed by EDS analysis carried out with respect to both the crude and purified brominated product, wherein purification procedure consists of the following steps:
a) dispersion in distilled water and centrifugation at 9000 rpm. for 10 min and decantation the liquid layer from over the nanotubes;
b) addition of methanol to the residues from step a) and centrifugation for 10 min. at 9000 rpm. and decantation the methanol layer from over the nanotubes;
c) putting the residues from step b) in the oven for a minimum 12 hours at 65°C; and
d) adding benzene to the sample obtained in step c) benzene, centrifugation for 10 min. at 9000 rpm., decantation benzene layer and leaving the residues for minimum 12 hours in the drying oven at 80°C.

2. The process according to claim 1, **characterized in that** the native multi-walled carbon nanotubes purified and oxidized with hydrogen peroxide and having the functional groups -COOH, are placed on a petri reaction dish in a closed vessel with liquid bromine vigorously stirred with a magnetic stirrer to increase the bromine vapor pressure in the vessel and then the whole is placed in an oil bath and heated at 30°C for 10 days.

## Patentansprüche

1. Ein Verfahren zur Herstellung bromierter mehrwandiger Kohlenstoffnanoröhren, bei dem die mit carboxylierten Gruppen funktionalisierten Kohlenstoffnanoröhren, erhalten durch vorherige Oxidation von nativen mehrwandigen Kohlenstoffnanoröhren mit 30% Wasserstoffperoxid, mit flüssigem Brom durch Erhitzen auf 30 °C 5 bis 10 Tage lang behandelt werden, wobei die durch kovalent gebundene Bromatome funktionalisierten mehrwandigen Kohlenstoffnanoröhren erhalten werden, wie dies eine EDS-Analyse bestätigt, die sowohl an einem rohen als auch an einem gereinigten bromierten Produkt durchgeführt wurde, wobei das Reinigungsverfahren aus folgenden Phasen besteht:
a) Dispergieren in destilliertem Wasser und 10-minütiges Zentrifugieren bei 9000 U / min sowie Dekantieren der Flüssigkeitsschicht über den Nanoröhren;
b) Zugeben von Methanol zu dem Rückstand aus Phase a) und 10-minütiges Zentrifugieren bei 9000 U / min sowie Dekantieren der Methanolschicht über den Nanoröhren;
c) Den Rückstand aus Phase b) in einen Ofen bei 65° C für mindestens 12 Stunden stellen; und
d) Zugeben von Benzol zu der in Phase c) erhaltenen Probe, 10-minütiges Zentrifugieren bei 9000 U / min; Dekantieren der Benzolschicht und Belassen des Rückstands in einem Trockenofen bei 80 °C für mindestens 12 Stunden.

2. Das Verfahren nach Anspruch 1, **dadurch gekennzeichnet, dass** die mit Wasserstoffperoxid gereinigten und oxidierten sowie die funktionellen -COOH Gruppen aufweisenden nativen mehrwandigen Kohlenstoffnanoröhren in eine Petrischale in einem geschlossenen Gefäß mit flüssigem Brom, das mit einem Magnetrührer intensiv gerührt wird, um den Dampfdruck von Brom in diesem Gefäß zu erhöhen, platziert werden und anschließend alles in ein Ölbad gestellt und 10 Tage lang bei 30° C erhitzt wird.

## Revendications

1. Procédé de production de nanotubes de carbone pluri-feuillets dopés au brome selon lequel des nanotubes de carbone pluri-feuillets fonctionnalisés avec des groupes carboxyles, obtenus par oxydation préalable de nanotubes de carbone natifs pluri-feuillets au peroxyde d'hydrogène à 30%, sont soumis à la réaction avec le brome liquide par chauffage à 30 ° C pendant 5 à 10 jours en recevant des nanotubes de carbone pluri-feuillets fonctionnalisés avec des atomes de brome liés de manière covalente, ce qui est confirmé par l'analyse EDS réalisée à la fois pour le produit bromé brut qu'au produit bromé purifié, alors que la procédure de purification est composée d'étapes suivantes:
a) dispersion dans l'eau distillée et centrifugation à 9000 tr / min pendant 10 min. ainsi que décantation de la couche liquide surnageant au-dessus des nanotubes;
b) addition de méthanol au résidu de l'étape a) et centrifugation pendant 10 min. à 9 000 tr / min et décantation de la couche de méthanol au-dessus des nanotubes;
c) placement du résidu de l'étape b) dans un four pendant 12 heures au minimum à 65 ° C; et
d) addition de benzène à l'échantillon obtenu à l'étape c), centrifugation pendant 10 min. à 9000 tr / min, décantation de la couche de benzène et laisser le résidu pendant 12 heures au minimum dans une étuve à 80 ° C.

2. Procédé selon la revendication 1, **caractérisé en ce que** les nanotubes de carbone natifs pluri-feuillets purifiés et oxydés au peroxyde d'hydrogène et ayant des groupes fonctionnels -COOH sont placés sur la boîte de Pétri dans un récipient fermé avec du brome liquide intensément agité par un agitateur magnétique pour augmenter la pression de vapeur du brome dans ce récipient, puis le tout est placé dans un bain d'huile et chauffé à 30 ° C pendant 10 jours.
